(19) Europäisches Patentamt
European Patent Office
Office européen des brevets

(11) **EP 3 588 699 A1**

(12) **EUROPÄISCHE PATENTANMELDUNG**

(43) Veröffentlichungstag:
**01.01.2020 Patentblatt 2020/01**

(51) Int Cl.:
*H01S 3/082* (2006.01)  *H01S 3/117* (2006.01)
*H01S 3/23* (2006.01)  *H01S 3/115* (2006.01)

(21) Anmeldenummer: **18180659.7**

(22) Anmeldetag: **29.06.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **TRUMPF Schweiz AG**
**7214 Grüsch (CH)**

(72) Erfinder: **Seifert, Albert**
**7208 Malans (CH)**

(74) Vertreter: **Kohler Schmid Möbus Patentanwälte Partnerschaftsgesellschaft mbB**
**Gropiusplatz 10**
**70563 Stuttgart (DE)**

Bemerkungen:
Geänderte Patentansprüche gemäss Regel 137(2) EPÜ.

(54) **LASERSYSTEM ZUR ERZEUGUNG VON LASERPULSEN**

(57) Die Erfindung betrifft ein Lasersystem (1) zur Erzeugung von Laserpulsen, umfassend: einen Hauptresonator (2) mit einem Hauptresonator-Strahlengang (6), in dem ein laseraktives Medium (4), insbesondere ein laseraktives Festkörpermedium, und ein optischer Modulator (5) angeordnet sind, einen Hilfsresonator (3) zur Begrenzung einer Verstärkung (g) des laseraktiven Mediums (4) des Hauptresonators (2), wobei ein Hilfsresonator-Strahlengang (14) und der Hauptresonator-Strahlengang (6) einen gemeinsamen Resonatorabschnitt (15) aufweisen, in dem das laseraktive Medium (4) angeordnet ist. Der Hilfsresonator (3) weist eine vorgegebene Schwelleninversion ($N_{C,A}$) auf, die um mindestens 10%, bevorzugt um mindestens 20%, insbesondere um mindestens 50% größer ist als eine minimale Schwelleninversion ($N_{C,H}$) des Hauptresonators (2).

Fig. 1

**Beschreibung**

Die vorliegende Erfindung betrifft ein Lasersystem zur Erzeugung von Laserpulsen, umfassend: einen Hauptresonator mit einem Hauptresonator-Strahlengang, in dem ein laseraktives Medium, insbesondere ein laseraktives Festkörpermedium, und ein optischer Modulator angeordnet sind, einen Hilfsresonator zur Begrenzung der Verstärkung des laseraktiven Festkörpermediums des Hauptresonators, wobei ein Hilfsresonator-Strahlengang und der Hauptresonator-Strahlengang einen gemeinsamen Resonatorabschnitt aufweisen, in dem das laseraktive Medium angeordnet ist.

Ein solches Lasersystem ist aus der WO 2013/017338 A1 bekannt geworden. Bei dem dort beschriebenen Lasersystem wird der optische Modulator, beispielsweise in Form eines Akusto-Optischen Modulators oder eines Elektro-Optischen Modulators, als Güteschalter bzw. als Q-Switch eingesetzt, um Laserpulse auf einer Zeitskala z.B. im Nanosekunden-Bereich zu erzeugen. Der optische Modulator erfüllt hierbei zwei Aufgaben: Einerseits dient er zur Erzeugung der Laserpulse, wenn diese von der Anwendung angefordert werden, beispielsweise beim Vektormarkieren während der Laserbeschriftung. In Zeiten, in denen keine Laserimpulse von der Anwendung angefordert werden (so genannte Vektorpausen), sperrt der optische Modulator den Hauptresonator und sorgt dafür, dass keine schädliche Dauerstrich-Laserstrahlung den Hauptresonator verlässt und auf das Werkstück trifft (so genannte Prozess-Shutter-Funktionalität).

Bei Resonatoren mit einem hohen Verstärkungsfaktor (Gain) besteht das Problem, dass der optische Modulator ausreichend hohe Verluste gewährleisten muss, um den Resonator vollständig zu sperren. Die Realisierung von hohen Verlusten kann in der praktischen Umsetzung schwierig sein und die maximale Leistung limitieren, die aus dem Resonator extrahiert werden kann. Um die Verstärkung in dem laseraktiven Medium zu begrenzen, wird in der WO 2013/017338 A1 vorgeschlagen, einen Hilfsresonator vorzusehen, der einen gemeinsamen Resonatorabschnitt mit dem Hauptresonator aufweist, in dem das laseraktive Festkörpermedium angeordnet ist. Werden die Pausen zwischen den Laserpulsen zu lang, steigt die Inversion in dem laseraktiven Festkörpermedium über die Schwelle des Hilfsresonators und dieser läuft im Dauerstrich-Betrieb an. Die Inversion des Lasermediums wird somit an der Laserschwelle des Hilfsresonators gehalten und kann nicht weiter steigen. In der WO 2005/013445 A1 ist eine Begrenzung der Verstärkung eines Faserverstärkers mit Hilfe eines weiteren Resonators beschrieben.

Bei laseraktiven Festkörpermedien, die viel Energie speichern können, d.h. die eine lange Fluoreszenz-Lebensdauer des oberen Laserniveaus aufweisen, kann der wieder einsetzende Pulsbetrieb nach einer ausreichend langen Sperrzeit zu Laserpulsen mit stark überhöhter Energie führen. Diese können schädlich für die jeweilige Anwendung sein oder zur Beschädigung von optischen Komponenten führen. Aus der Literatur, beispielsweise der US 6,038,241, oder dem Artikel "Acousto-Optic Theory", "www.aaoptoelectronic.com/../AAOPTO-Theory2013-4.pdf", sind Techniken zur Erstpuls-Behandlung in Form der so genannten Erstpuls-Unterdrückung ("first pulse suppression, FPS") und der Vorpuls-Vernichtung ("pre-pulse killing, PPK") bekannt. Für die Anwendung dieser Techniken ist es erforderlich, dass der optische Modulator eine variable Verlustrate erzeugt, d.h. dieser ist nicht nur zwischen einem geschlossenen und einem geöffneten Betriebszustand umschaltbar, sondern die Verlustrate ist stufenweise oder kontinuierlich einstellbar.

In der WO 2013/017338 A1 wird vorgeschlagen, in dem Hilfsresonator ein Modulationselement zur Modulation der Verlustrate des Hilfsresonators vorzusehen. Das Modulationselement wird dazu verwendet, die Verluste im Hilfsresonator einzustellen und auf diese Weise das Inversionsniveau im Lasermedium in den Pulspausen zu kontrollieren. Auf diese Weise kann die Verstärkung für den ersten Laserpuls nach der Pulspause reguliert werden. Insbesondere können die Verluste und somit die Verstärkung für den ersten Laserpuls nach der Pulspause in Abhängigkeit von der Repetitionsrate eingestellt und dadurch bei jeder Repetitionsrate eine First-Pulse-Suppression realisiert werden. Um dies zu erreichen, ist es erforderlich, die Verluste im Hilfsresonator gleich oder unwesentlich größer als im Hauptresonator zu wählen, damit die Energie des ersten Laserpulses möglichst gleich groß wie bei den nachfolgenden Laserpulsen ist.

In der WO 2008/060407 A2 ist ein regenerativer Verstärker beschrieben, der einen primären Resonator mit einem Verstärkermedium und eine optische Schaltanordnung zum Öffnen und Schließen des primären Resonators aufweist. Ein sekundärer Resonator weist ebenfalls das Verstärkermedium, aber nicht die optische Schaltanordnung auf. In der WO 2008/060407 A2 wird vorgeschlagen, für die First-Pulse-Suppression in dem sekundären Resonator einen Akusto-Optischen-Modulator vorzusehen, um die Verluste des sekundären Resonators zu variieren, so dass die Pulshöhen der verstärkten Pulse alle jeweils ungefähr dieselbe Energie aufweisen.

In der DE 197 07 003 A1 ist ein Beschriftungslasersystem beschrieben, bei dem durch einen außerhalb eines gütegeschalteten Resonators befindlichen optischen Modulator der Laserstrahl in eine X/Y-Ablenkeinheit gebeugt wird. Durch eine Synchronisation des externen Resonators und eines im Resonator befindlichen Modulators kann verhindert werden, dass der erste, ggf. überhöhte Laserimpuls einer Pulsfolge abgebeugt wird und das Werkstück erreicht.

Aufgabe der Erfindung

Der Erfindung liegt die Aufgabe zugrunde, ein Lasersystem bereitzustellen, welches trotz einer hohen Verstärkung eine effiziente Erstpuls-Behandlung ermöglicht.

Gegenstand der Erfindung

Diese Aufgabe wird erfindungsgemäß durch ein Lasersystem der eingangs genannten Art gelöst, bei dem der Hilfsresonator eine vorgegebene Schwelleninversion aufweist, die um mindestens 10%, bevorzugt um mindestens 20%, insbesondere um mindestens 50%, ggf. um mindestens 100 % größer ist als die minimale Schwelleninversion des Hauptresonators. Unter der minimalen Schwelleninversion des Hauptresonators wird die Schwelleninversion des Hauptresonators bei vollständig geöffnetem optischen Modulator verstanden.

Die Schwelleninversion Nc eines Resonators ist gemäß dem Lehrbuch "Principles of Lasers", O. Svelto, Springer Verlag, 2010, Seite 5, wie folgt definiert:

$$N_C = -[\ln R_1 R_2 + 2\ln(1 - L_i)]/2\sigma l \tag{1}$$

wobei $R_1$, $R_2$ die Reflektivitäten der den Resonator begrenzenden (End-)Spiegel, $L_i$ die interne Verlustrate des Resonators, $\sigma$ den Emissionswirkungsquerschnitt des Lasermaterials und I die Länge des Lasermaterials in dem Resonator bezeichnen.

Der Erfinder hat erkannt, dass die im Hauptresonator und im Hilfsresonator propagierende Laserstrahlung miteinander wechselwirken bzw. sich gegenseitig stören, wenn die Schwelleninversion ungefähr gleich groß ist. Um eine solche gegenseitige Störung zu vermeiden, ist es günstig, wenn die Schwelleninversion des Hilfsresonators deutlich größer gewählt wird als die Schwelleninversion des Hauptresonators. Die fest vorgegebene Schwelleninversion des Hilfsresonators wird dabei derart gewählt, dass der gepulste Betrieb des Hauptresonators bis zu einer vorgegebenen niedrigsten Repetitionsrate ungestört ablaufen kann. Werden die Pausen zwischen den Laserpulsen länger, steigt die Inversion in dem laseraktiven Medium über die Laserschwelle des Hilfsresonators und dieser läuft im Dauerstrich-Betrieb an. Wie bei den weiter oben beschriebenen Lasersystemen wird auf diese Weise die Inversion in dem laseraktiven Festkörpermedium an der Laserschwelle des Hilfsresonators gehalten und kann nicht weiter steigen.

Die Energie des ersten Laserpulses nach einer Pulspause wird durch die fest vorgegebene Schwelleninversion des Hilfsresonators bestimmt. Die fest vorgegebene Schwelleninversion des Hilfsresonators wird hierbei an der niedrigsten Repetitionsrate orientiert, die für die jeweilige Anwendung von Interesse ist. Die Energie des ersten Pulses einer Pulsfolge wird typischerweise durch die weiter oben beschriebenen Verfahren (FPS bzw. FPK) mit Hilfe des optischen Modulators im Hauptresonator unterdrückt. Bei dem erfindungsgemäßen Lasersystem erfolgt zur Erstpuls-Unterdrückung somit eine Kombination aus der Begrenzung der Verstärkung durch einen Hilfsresonator und einer geeigneten Ansteuerung des optischen Modulators im Hauptresonator, ohne die Verwendung eines zusätzlichen Modulationselements im Hilfsresonator, wie dies in der WO 2013/017338 A1 beschrieben ist.

Der optische Modulator im Hauptresonator wird in diesem Fall typischerweise derart ausgelegt, dass dieser es nicht ermöglicht, den Hauptresonator (ohne das Vorhandensein des Hilfsresonators) vollständig zu sperren. Mit anderen Worten kann auch bei einem optischen Modulator, der im gesperrten Zustand betrieben wird, Laserleistung aus dem Hauptresonator austreten. Die Möglichkeit der vollständigen Sperrung des Hauptresonators durch einen optischen Modulator führt im Gegensatz dazu im Allgemeinen zu einer Limitierung der Ausgangsleistung des Lasersystems, d.h. der (Haupt-)Resonator muss für eine vergleichsweise niedrige Verstärkung ausgelegt werden, z.B. durch Reduzierung der Pumpleistung, oder muss eine vergleichsweise große Länge aufweisen, was eine Erhöhung der Pulsdauern der Laserpulse zur Folge hat.

Für die Erzeugung der (größeren) Schwelleninversion in dem Hilfsresonator bestehen verschiedene Möglichkeiten. Hierbei ist zu berücksichtigen, dass der Emissionswirkungsquerschnitt $\sigma$ des Festkörpermediums für die in dem Hauptresonator propagierende Laserstrahlung und für die in dem Hilfsresonator propagierende Laserstrahlung nicht zwingend gleich groß ist. In der Regel unterscheidet sich beispielsweise für den Fall, dass im Hauptresonator und im Hilfsresonator Laserstrahlung mit unterschiedlichen Wellenlängen propagiert, der Emissionswirkungsquerschnitt des Festkörpermediums im Hauptresonator vom Emissionswirkungsquerschnitt des Festkörpermediums im Hilfsresonator. Auch für den Fall, dass die Laserstrahlung im Hauptresonator und die Laserstrahlung im Hilfsresonator die gleiche Wellenlänge aufweisen, können bei einem anisotropen, beispielsweise doppelbrechenden Festkörpermedium der Emissionswirkungsquerschnitt für im Hauptresonator mit einer ersten Polarisationsrichtung propagierender Laserstrahlung und der Emissionswirkungsquerschnitt für im Hilfsresonator mit einer zweiten, zur ersten senkrechten Richtung propagierender Laserstrahlung unterschiedlich sein.

Bei einer Ausführungsform weist der Hilfsresonator eine Auskoppeleinrichtung, insbesondere einen Auskoppelspiegel, auf, deren Reflektivität um mindestens 10%, bevorzugt um mindestens 20%, kleiner ist als eine Reflektivität einer Auskoppeleinrichtung, insbesondere eines Auskoppelspiegels, des Hauptresonators. Ein vorgegebenes Verhältnis zwischen der Schwelleninversion des Hauptresonators und der Schwelleninversion des Hilfsresonators lässt sich mit Hilfe einer Auskoppeleinrichtung, insbesondere mittels eines (teildurchlässigen) Auskoppelspiegels, bzw. von dessen Reflektivität besonders einfach einstellen. Hierbei wird ausgenutzt, dass die Reflektivität bzw. die Transmission des Auskoppelspiegels im Wesentlichen unabhängig von der Leistung ist, die auf den Auskoppelspiegel auftrifft.

Vorausgesetzt, dass alle Parameter in der obigen Gleichung (1) für den Hauptresonator und den Hilfsresonator bis auf den Auskoppelgrad bzw. die Reflektivität des jeweiligen Auskoppelspiegels gleich groß sind, ist es erforderlich, dass die Verluste im Hilfsresonator größer sind als im Hauptresonator, um die größere Schwelleninversion des Hilfsresonators zu erzeugen. Ein (praktisch) gleicher Emissionswirkungsquerschnitt $\sigma$ liegt typischerweise bei einachsigen Kristallen für zwei zueinander senkrechte Polarisationsrichtungen vor, die im Hauptresonator bzw. im Hilfsresonator (bei gleichen Wellenlängen) propagieren, z.B. bei Yb:YAG oder Nd:YAG. Die Reflektivität des Auskoppelelements des Hauptresonators bzw. von dessen Auskoppelspiegel kann in diesem Fall beispielsweise in der Größenordnung von ca. 70% oder darüber liegen, während die Reflektivität des Hilfsresonators bzw. von dessen Auskoppelspiegel beispielsweise in der Größenordnung von ca. 40%-50% liegen kann.

Es versteht sich, dass unter anderen Annahmen hinsichtlich der in der obigen Gleichung (1) aufgeführten Parameter, beispielsweise eines unterschiedlichen Emissionswirkungsquerschnitts für den Haupt- und den Hilfsresonator, die Reflektivität des Auskoppelspiegels des Hilfsresonators auch größer sein kann als die Reflektivität des Auskoppelspiegels des Hauptresonators, und trotzdem eine (deutlich) größere Schwelleninversion des Hilfsresonators erzeugt werden kann. Beispielsweise kann dies bei Festkörpermaterialien in Form von doppelbrechenden Kristallen wie z.B. Nd:YVO4 der Fall sein, bei dem der Emissionswirkungsquerschnitt in zwei zueinander senkrechten Polarisationsrichtungen ein Verhältnis von ca. 1 / 2,73 aufweist.

Bei einer weiteren Ausführungsform weist der Hilfsresonator mindestens ein - nicht mit der Auskoppeleinrichtung übereinstimmendes - Verlustelement zur Erzeugung einer vorgegebenen Verlustrate des Hilfsresonators auf. Die Verlustrate entspricht der Größe $L_i$ in obiger Gleichung (1), wenn die (in der Regel geringfügigen) anderweitigen Verluste des Hilfsresonators vernachlässigt werden. Unter einem Verlustelement wird hierbei nicht der Auskoppelspiegel bzw. das Auskoppelelement des Hilfsresonators verstanden, der in obiger Gleichung (1) bereits durch seine um den Auskoppelgrad verminderte Reflektivität ($R_1$ oder $R_2$) berücksichtigt wird. Bei dem Verlustelement kann es sich um einen in dem Hilfsresonator angeordneten Spiegel handeln, dessen Reflektivität deutlich geringer gewählt wird als dies üblicherweise der Fall ist. Ein solcher Spiegel, beispielsweise ein End-Spiegel oder ein Faltungsspiegel, kann beispielsweise eine Reflektivität von weniger als 90%, von weniger als 80% oder von weniger als 60% aufweisen. Die Verwendung eines Verlustelements im Hilfsresonator ist beispielsweise günstig, wenn die Auskopplung aus dem Hauptresonator und die Auskopplung aus dem Hilfsresonator an ein- und demselben Auskoppelelement in dem gemeinsamen Resonatorabschnitt erfolgt.

Bei einer weiteren Ausführungsform ist der optische Modulator zur Einstellung einer kontinuierlich und/oder stufenweise einstellbaren Verlustrate des Hauptresonators ausgebildet. Wie weiter oben beschrieben wurde, ist es typischerweise erforderlich, zusätzlich zur Begrenzung der Verstärkung des Hauptresonators durch den Hilfsresonator abhängig von der Repetitionsrate eine Unterdrückung des ersten Pulses einer Sequenz durch FPS bzw. FPK vorzunehmen. Zu diesem Zweck ist es erforderlich, einen optischen Modulator beispielsweise in Form eines Akusto-Optischen Modulators oder ggf. eines Elektro-Optischen Modulators zu verwenden, der nicht nur zwischen einem ersten, geschlossenen Schaltzustand und einem zweiten, geöffneten Schaltzustand umschaltbar ist, sondern bei dem zwischen dem geschlossenen und dem geöffneten Schaltzustand weitere Schaltzustände einstellbar sind, die eine teilweise Öffnung des Hauptresonators ermöglichen.

Bei einer Weiterbildung weist das Lasersystem eine Steuerungseinrichtung zur Ansteuerung des optischen Modulators zur Erstpuls-Behandlung einer Sequenz von Laserpulsen auf. Die Steuerungseinrichtung kann den optischen Modulator ansteuern, um die weiter oben beschriebenen Verfahren der FPS bzw. FPK für die Erstpuls-Behandlung durchzuführen.

Bei einer weiteren Ausführungsform weist das Lasersystem eine Kopplungseinrichtung zur Bildung des gemeinsamen Resonatorabschnitts durch Kopplung des Hilfsresonator-Strahlengangs des Hilfsresonators an den Hauptresonator-Strahlengang des Hauptresonators auf. Der gemeinsame Resonatorabschnitt kann alternativ gebildet werden, indem der Strahlengang des Hauptresonators und der Strahlengang des Hilfsresonators das laseraktive Festkörpermedium in zwei unterschiedlichen Richtungen durchlaufen und sich lediglich in dem laseraktiven Festkörpermedium überschneiden. Bei der hier beschriebenen Ausführungsform wird die Kopplungseinrichtung dazu verwendet, den Strahlengang des Hilfsresonators und den Strahlengang des Hauptresonators derart zu koppeln, dass diese das laseraktive Festkörpermedium im Wesentlichen parallel und annähernd entlang des gleichen Propagationswegs durchlaufen.

Bei einer Weiterbildung umfasst bzw. bildet die Kopplungseinrichtung einen Polarisations-Strahlteiler. In diesem Fall sind die im Hauptresonator propagierende Laserstrahlung und die im Hilfsresonator propagierende Laserstrahlung jeweils linear polarisiert, wobei die beiden Polarisationsrichtungen senkrecht aufeinander stehen. Es versteht sich, dass die Kopplungseinrichtung auch auf andere Weise ausgebildet sein kann. Beispielsweise kann die Laserstrahlung in dem Hauptresonator und die Laserstrahlung in dem Hilfsresonator eine jeweils unterschiedliche Wellenlänge aufweisen und die Kopplungseinrichtung kann einen dichroitischen Spiegel bzw. Strahlteiler aufweisen. Bei einem solchen Lasersystem sind die End- bzw. die Auskoppelspiegel der Resonatoren geeignet beschichtet und das laseraktive Festkörpermedium muss geeignete Emissionseigenschaften aufweisen. Ein Lasersystem, bei dem eine chromatische Kopplung zweier Resonatoren erfolgt, ist beispielsweise in der US 6,078,606 beschrieben. Eine weitere Möglichkeit zur Realisierung einer Kopplungseinrichtung stellt ein doppelbrechender Beam-Displacer, beispielsweise ein YVO$_4$-Displacer, zur Polarisationsaufspaltung in Kombination mit einer räumlichen Trennung z.B. über einen Pick-Off-Spiegel dar.

Bei einer weiteren Ausführungsform umfasst das Lasersystem ein weiteres laseraktives Medium, insbesondere ein weiteres laseraktives Festkörpermedium, das in einem Überlagerungsabschnitt eines aus dem Hauptresonator ausgekoppelten Nutz-Strahlengangs und eines aus dem Hilfsresonator ausgekoppelten Dump-Strahlengangs angeordnet ist. In diesem Fall handelt es sich bei dem Lasersystem um ein so genanntes MOPA(Master Oscillator Power Amplifier)-System und das weitere laseraktive Medium dient als Verstärker-Medium des MOPA-Systems.

Der Vorteil der Überlagerung des Nutz-Strahlengangs und des Dump-Strahlengangs in dem Überlagerungsabschnitt besteht darin, dass die (cw-)Laserstrahlung, die aus dem Hilfsresonator ausgekoppelt wird, in den Pausen zwischen den Sequenzen der Laserpulse (Vektorpausen), die aus dem Hauptresonator ausgekoppelt werden, das weitere laseraktive Medium sättigt und dadurch eine Erstpulsbehandlung in dem weiteren laseraktiven Medium nicht erforderlich ist. Würden die ausgekoppelten Laserpulse, welche die Seed-Strahlung für das weitere laseraktive Medium bilden, in den Vektorpausen blockiert, so würde die Inversionsdichte in dem weiteren laseraktiven Medium weiter ansteigen und der wieder einsetzende Pulsbetrieb zu Beginn eines neuen Vektors bzw. einer neuen Sequenz von Laserpulsen würde stark überhöht werden und ggf. zu Beschädigungen an Optiken führen.

Alternativ zur oben beschriebenen Ausführungsform kann das weitere laseraktive Medium im Nutz-Strahlengang außerhalb des Dump-Strahlengangs angeordnet werden. In diesem Fall sind zusätzliche Maßnahmen zur Erstpulsbehandlung erforderlich. Beispielsweise kann die Erstpulsbehandlung über eine Modulation der Pumpleistung erfolgen oder über einen oder mehrere Hilfsresonatoren, welche die Verstärkung des weiteren laseraktiven Mediums in den Pulspausen begrenzen. Auch kann eine Prozess-Shutter-Funktionalität durch einen externen Modulator, beispielsweise durch einen Elektro-Optischen Modulator realisiert werden, wie dies in der US 8,995,052 B1 beschrieben ist; ein solcher externer Modulator erhöht aber die Komplexität des Lasersystems.

Für die Bildung des Überlagerungsabschnitts können die Laserpulse des Nutz-Strahlengangs und die cw-Laserstrahlung des Dump-Strahlengangs über ein- und dasselbe Auskoppelelement, beispielsweise über einen in dem gemeinsamen Resonatorabschnitt angeordneten Auskoppelspiegel, aus dem Hauptresonator und dem Hilfsresonator ausgekoppelt werden. Nach dem Überlagerungsabschnitt wird der Nutz-Strahlengang vom Dump-Strahlengang getrennt, was beispielsweise durch einen Polarisator erfolgen kann, wenn der Hauptresonator-Strahlengang und der Hilfsresonator-Strahlengang eine jeweils unterschiedliche Polarisation aufweisen. Es versteht sich, dass eine Trennung des Nutz-Strahlengangs vom Dump-Strahlengang auch auf andere Weise erfolgen kann, wenn der Hauptresonator-Strahlengang und der Hilfsresonator-Strahlengang sich in mindestens einer anderen Eigenschaft, beispielweise in der Wellenlänge, voneinander unterscheiden.

Bei einer Weiterbildung umfasst das Lasersystem eine Überlagerungseinrichtung, insbesondere einen Polarisator, zur Bildung eines gemeinsamen Überlagerungsabschnitts durch Überlagerung des Nutz-Strahlengangs und des Dump-Strahlengangs. In diesem Fall wird typischerweise der Nutz-Strahlengang und der Dump-Strahlengang über unterschiedliche Auskoppelelemente aus dem Hauptresonator bzw. aus dem Hilfsresonator ausgekoppelt. Hierbei kann die unterschiedliche Schwelleninversion im Hauptresonator und im Hilfsresonator durch einen unterschiedlichen Auskoppelgrad bzw. eine unterschiedliche Reflektivität der jeweiligen Auskoppelelemente erzeugt werden.

Bei einer weiteren Weiterbildung umfasst das Lasersystem eine Depolarisations-Kompensationseinrichtung zur Kompensation einer Depolarisation in dem laseraktiven Medium durch das weitere laseraktive Medium. Für die Depolarisations-Kompensation ist es in diesem Fall typischerweise erforderlich, dass die Nutz-Laserstrahlung und die Dump-Laserstrahlung senkrecht zueinander polarisiert sind. Ohne eine Depolarisationskompensation verschlechtert die in isotropen Lasermedien auftretende Depolarisation, die auf eine thermisch bedingte Doppelbrechung zurückzuführen ist, in diesem Fall den Kontrast zwischen der Nutz-Laserstrahlung und der Dump-Laserstrahlung, was für viele Anwendungen ungünstig ist.

Aus der Literatur sind Methoden zur Depolarisations-Kompensation unter Verwendung von zwei laseraktiven Medien bekannt, vgl. beispielsweise das Buch "Optical Resonators: Fundamentals, Advanced Concepts and Applications", von Norman Hodgson und Horst Weber, Springer Verlag, 2013, Seite 358-363, bei denen die Depolarisation in einem Lasermedium durch die (umgekehrt wirkende) Depolarisation in einem anderen Lasermedium in ein- und demselben Resonator kompensiert wird. Bei dem in der vorliegenden Anmeldung beschriebenen Lasersystem ist das laseraktive Medium in dem Hauptresonator angeordnet und das weitere laseraktive Medium, welches zur Kompensation der Depolarisation dient, bildet einen außerhalb des Hauptresonators angeordneten Verstärker.

Bei einer weiteren Ausführungsform weist die Depolarisations-Kompensationseinrichtung eine polarisationsdrehende Einrichtung auf, die in dem Überlagerungsabschnitt vor dem weiteren laseraktiven Festkörpermedium angeordnet ist. Die polarisationsdrehende Einrichtung ist typischerweise in Form eines Quarz-Rotators ausgebildet, bei dem die Polarisationsdrehung auf einer optischen Aktivität beruht. Ein solcher Quarz-Rotator hat gegenüber einem phasenschiebenden optischen Element (Retarder-Platte) den Vorteil, dass die Drehung der Polarisation unabhängig vom Winkel der Eingangs-Polarisation relativ zum Quarz-Rotator ist. Durch eine Drehung der Polarisationsrichtung z.B. um 90° werden die Polarisationsrichtungen der Nutz-Laserstrahlung und die Dump-Laserstrahlung in dem weiteren laseraktiven Medium vertauscht, so dass dieses für die Kompensation verwendet werden kann.

Bei einer weiteren Ausführungsform weist die Kompensationseinrichtung eine abbildende Optik zur Abbildung einer Ebene des laseraktiven Festkörpermediums auf eine entsprechende Ebene des weiteren laseraktiven Festkörpermediums auf. Die Nutz-Laserstrahlung bzw. die Dump-Laserstrahlung propagieren typischerweise aufgrund der thermischen Linsenwirkung nicht vollständig parallel zur Längsachse des jeweiligen laseraktiven Festkörpermediums. Entsprechend ist es günstig, wenn eine Abbildung von zwei einander entsprechenden Ebenen der laseraktiven Festkörpermedien aufeinander erfolgt, so dass ein jeweiliger Teilstrahl an ein- und demselben Ort senkrecht zur Längsachse sowohl durch das laseraktive Festkörpermedium als auch durch das weitere laseraktive Festkörpermedium propagiert.

Dies kann durch eine abbildende Optik erreicht werden, welche zwei einander entsprechende Ebenen der beiden laseraktiven Festkörpermedien aufeinander abbildet. Unter einander entsprechenden Ebenen werden Ebenen verstanden, die von den jeweiligen einander zugewandten Stirnseiten des laseraktiven Festkörpermediums und des weiteren laseraktiven Festkörpermediums gleich weit beabstandet sind. Bei den beiden Ebenen kann es sich beispielsweise um die einander zugewandten Stirnseiten der beiden Festkörpermedien handeln. Alternativ können die jeweiligen Hauptebenen der beiden Festkörpermedien durch eine 4f-Abbildung aufeinander abgebildet werden, wie dies in der weiter oben zitierten Literatur beschrieben ist. Bei den beiden laseraktiven Festkörpermedien kann es sich beispielsweise um Stablaser handeln.

Bei einer weiteren Ausführungsform sind das laseraktive Festkörpermedium und das weitere laseraktive Festkörpermedium aus dem gleichen Material gebildet. Dies ist insbesondere für die weiter oben beschriebene Depolarisationskompensation günstig. Zusätzlich zur Verwendung des gleichen Materials ist es für eine möglichst effiziente Depolarisationskompensation vorteilhaft, wenn sowohl der Resonator-Kristall als auch der Verstärker-Kristall möglichst gleich dimensioniert sind sowie die gleiche Dotierung aufweisen. Auch ist es günstig, wenn diese mit der gleichen Pumpleistung und mit dem gleichen Durchmesser des Pump-Spots gepumpt werden.

Bei einer weiteren Ausführungsform ist/sind das laseraktive Festkörpermedium und bevorzugt das weitere laseraktive Festkörpermedium ausgewählt aus der Gruppe umfassend: Nd:YAG, Yb:YAG, Yb:LuAG, Yb:CaF2, Yb:Lu2O3, Yb:GGG, Nd:YVO4, Nd:GdVO4, Yb:KGW und Yb:KYW. Bei manchen dieser laseraktiven Medien handelt es sich um uniaxiale Kristalle, deren Eigenschaften für beide Polarisationsrichtungen im Wesentlichen gleich sind, d.h. diese sind isotrop für die beiden Polarisationen und weisen gleiche Verstärkungsfaktoren für beide Polarisationen auf. Nachteilig an diesen Medien ist jedoch, dass sich durch das Pumpen eine radialsymmetrische Spannungsdoppelbrechung aufbaut, welche die Polarisationen räumlich aufgelöst unterschiedlich dreht und dadurch den Kontrast zwischen der Nutz-Laserstrahlung und der Dump-Laserstrahlung verschlechtert, weshalb die Anwendung der weiter oben beschriebenen Depolarisationskompensation bei diesen laseraktiven Medien vorteilhaft ist.

Die laseraktiven Festkörpermedien, insbesondere in Form von Laserstäben, können beispielsweise end-gepumpt werden. Zu diesem Zweck kann z.B. eine fasergekoppelte Laserdiode mit einer Laserwellenlänge verwendet werden, die an die Art des laseraktiven Festkörpermediums angepasst ist. In diesem Fall kann eine Optik z.B. in Form einer Teleskopanordnung die Austrittsfläche einer Lichtleitfaser auf die Stirnseite des laseraktiven Festkörpermediums abbilden. Es versteht sich aber, dass auch andere Arten von Pumpquellen für das Pumpen des jeweiligen laseraktiven Festkörpermediums verwendet werden können.

Das weiter oben beschriebene Lasersystem kann beispielsweise in eine Bearbeitungsmaschine zur Lasermarkierung integriert werden, welche z.B. eine zweidimensionale Ablenkung des Nutz-Laserstrahls auf ein Werkstück ermöglicht. Es versteht sich, dass das Lasersystem auch in andere Vorrichtungen integriert werden kann, bei der insbesondere Sequenzen von Laserpulsen mit einer hohen Repetitionsrate und mit kurzen Pulsdauern und hoher Leistung benötigt werden.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

Fig. 1     eine schematische Darstellung eines Lasersystems zur Erzeugung von Laserpulsen mit einem Hauptresonator, der einen optischen Modulator aufweist, und mit einem Hilfsresonator, wobei beide Resonatoren einen gemeinsamen Resonatorabschnitt mit einem laseraktiven Festkörpermedium aufweisen,

Fig. 2a,b     schematische Darstellungen von Zeitverläufen bei der Ansteuerung des optischen Modulators zur First-Pulse-Suppression bzw. zum Pre-Pulse-Killing,

Fig. 3     eine Darstellung eines Lasersystems analog zu Fig. 1 mit einem weiteren laseraktiven Festkörpermedium, das in einem Überlagerungsabschnitt außerhalb des Hauptresonators angeordnet ist, und

Fig. 4    eine Darstellung analog zu Fig. 3 mit einer Depolarisations-Kompensationseinrichtung zur Kompensation einer Depolarisation in dem laseraktiven Festkörpermedium.

In der folgenden Beschreibung der Zeichnungen werden für gleiche bzw. funktionsgleiche Bauteile identische Bezugszeichen verwendet.

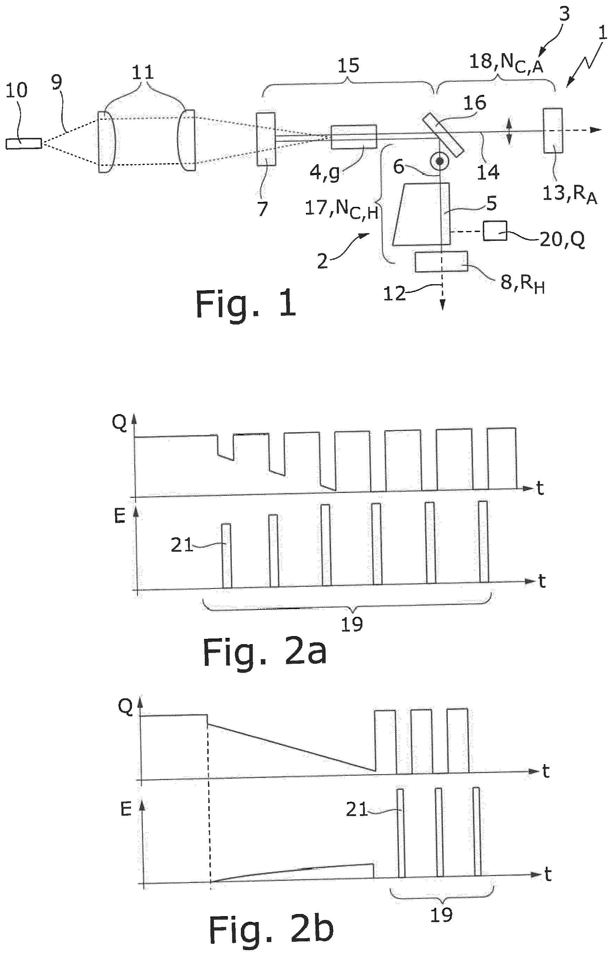

**Fig. 1** zeigt einen beispielhaften Aufbau eines Lasersystems 1, welches einen Hauptresonator 2 sowie einen Hilfsresonator 3 aufweist. Der Hauptresonator 2 weist ein laseraktives Festkörpermedium 4 auf, bei dem es sich im gezeigten Beispiel um einen Laserstab handelt, der beispielsweise aus Yb:YAG, Nd:YAG, Yb:LuAG, Yb:CaF2, Yb:Lu2O3, Yb:GGG, Nd:YVO4, Nd:GdVO4, Yb:KGW oder Yb:KYW gebildet ist. Der Hauptresonator 2 weist einen optischen Modulator 5 in Form eines Akusto-Optischen Modulators auf. Alternativ kann auch eine andere Art von optischem Modulator 5, beispielsweise ein Elektro-Optischer-Modulator, in dem Hauptresonator 2 angeordnet werden.

Der Hauptresonator 2, genauer gesagt ein Hauptresonator-Strahlengang 6, wird durch zwei Endspiegel 7, 8 begrenzt, von denen der erste, plane Endspiegel 7 zur Einkopplung von Pumpstrahlung 9 in den Hauptresonator 2 bzw. in das laseraktive Festkörpermedium 4 dient. Zur Erzeugung der Pumpstrahlung 9 dient eine nicht bildlich dargestellte Laserdiode. Die von der Laserdiode emittierte Pumpstrahlung 9 wird über eine Lichtleitfaser 10 geführt, wobei die Austrittsfläche der Lichtleitfaser 10 über ein Strahlteleskop 11 auf eine Stirnseite des laseraktiven Festkörpermediums 4 abgebildet wird. Der zweite, plane Endspiegel 8 dient als Auskoppelspiegel zur Auskopplung eines Nutz-Strahlengangs 12 aus dem Hauptresonator 3.

Der Hilfsresonator 3 wird an einer Seite durch den ersten Endspiegel 7 und an der anderen Seite durch einen teildurchlässigen Auskoppelspiegel 13 begrenzt. Der Hauptresonator 2, genauer gesagt der Hauptresonator-Strahlengang 6, und der Hilfsresonator 3, genauer gesagt dessen Hilfsresonator-Strahlengang 14, weisen einen gemeinsamen Resonatorabschnitt 15 auf, in dem das laseraktive Festkörpermedium 4 angeordnet ist. Für die Kopplung des Hilfsresonators 3 an den Hauptresonator 2 zur Bildung des gemeinsamen Resonatorabschnitts 15 wird bei dem in Fig. 1 gezeigten Beispiel eine Kopplungseinrichtung in Form eines Polarisations-Strahlteilers 16 verwendet. Der Polarisations-Strahlteiler 16 dient zur Aufteilung der in dem laseraktiven Festkörpermedium 4 des gemeinsamen Resonatorabschnitts 15 erzeugten Laserstrahlung auf zwei zueinander senkrechte Polarisationsrichtungen (horizontale Polarisation, vertikale Polarisation) auf einen Hauptresonator-Abschnitt 17 und auf einen Hilfsresonator-Abschnitt 18. Im Hauptresonator 2, genauer gesagt in dem Hauptresonator-Abschnitt 17 propagiert nur s-polarisierte Laserstrahlung, während im Hilfsresonator 3, genauer gesagt im Hilfsresonator-Abschnitt 18, nur p-polarisierte Laserstrahlung propagiert.

Der optische Modulator 5 im Hauptresonator 2 dient als Güteschalter (Q-Switch) zum gepulsten Betrieb des Hauptresonators 2. Werden bei der jeweiligen Anwendung, für welche das Lasersystem 1 eingesetzt wird, beispielsweise beim Lasermarkieren, über einen längeren Zeitraum keine Laserpulse benötigt, steigt die Inversion in dem laseraktiven Festkörpermedium 4 an. Erreicht die Verstärkung g in dem laseraktiven Festkörpermedium 4 die Laserschwelle des Hilfsresonators 3, läuft der Hilfsresonator 3 im Dauerstrich-Betrieb an. Somit wird die Inversion bzw. die Verstärkung g in dem laseraktiven Festkörpermedium 4 an der Schwelle des Hilfsresonators 3 gehalten und kann nicht weiter steigen, d.h. der Hilfsresonator 3 dient zur Begrenzung der Verstärkung g des Hauptresonators 2.

Zu diesem Zweck ist es erforderlich, dass eine Schwelleninversion $N_{C,A}$ des Hilfsresonators 3 zumindest so groß ist wie eine minimale Schwelleninversion $N_{C,H}$ des Hauptresonators 2 (vgl. obige Gleichung (1)). Um zu vermeiden, dass sich der Hauptresonator 2 und der Hilfsresonator 3 gegenseitig stören, sollte die Schwelleninversion $N_{C,A}$ in dem Hilfsresonator 3 um mindestens 10%, bevorzugt um mindestens 20%, insbesondere um mindestens 50%, ggf. um mindestens 70%, 80 % oder 100% größer sein als die Schwelleninversion $N_{C,H}$ des Hauptresonators 2.

Die Energie des ersten Laserpulses 21 (vgl. **Fig. 2a,b**) nach einer Vektorpause, in der keine Laserpulse 21 aus dem Hauptresonator 2 ausgekoppelt werden, wird von der Schwelleninversion $N_{C,A}$ des Hilfsresonators 3 bestimmt. Im vorliegenden Beispiel wird davon ausgegangen, dass der Hilfsresonator 3 eine praktisch vernachlässigbare Verlus-trate $L_i$ aufweist, so dass die Verluste des Hilfsresonators 3 durch den Auskoppelgrad $A_A$ bzw. die Reflektivität $R_A$ des Auskoppelspiegels 13 bestimmt werden ($A_A = 1 - R_A$, wobei Verluste durch Absorption vernachlässigt wurden). Die Reflektivität $R_A$ bzw. der Auskoppelgrad $A_A$ des Hilfsresonators 3 wird in Abhängigkeit von der niedrigsten Repetitionsrate ausgelegt, die für die jeweilige Anwendung von Interesse ist. Im gezeigten Beispiel, bei dem der Emissionswirkungs-querschnitt $\sigma$ des laseraktiven Festkörpermediums 4 für den Hauptresonator 2 und den Hilfsresonator 3 gleich groß ist, ist der Auskoppelgrad $A_A$ des Auskoppelspiegels 13 des Hilfsresonators 3 vergleichsweise groß bzw. dessen Reflektivität $R_A$ vergleichsweise gering und liegt bei ca. 40 % - 50%. Der Hauptresonator 2 weist demgegenüber eine minimale Schwelleninversion $N_{C,A}$ auf, die (bei ausgeschaltetem optischem Modulator 3) durch den Auskoppelgrad $A_H$ bzw. die Reflektivität $R_H$ ($A_H = 1 - R_H$) von ca. 70 % des Auskoppelspiegels 8 des Hauptresonators 2 gegeben ist.

Setzt man in die weiter oben angegebene Gleichung (1) realistische Werte für $\sigma$ und I ein, setzt zusätzlich $R_2 = 1,0$, vernachlässigt die Verlustrate $L_i$ und setzt $R_1 = 0,7$, so ergibt sich für den Hauptresonator 2 eine Schwelleninversions(dichte) $N_{C,H}$ von ca. $1 \times 10^{19}$ / cm$^3$, während sich für den Hilfsresonator 3 eine Schwelleninversions(dichte) $N_{C,A}$ von ca. $2,1 \times 10^{19}$ / cm$^3$ ergibt. Die Schwelleninversion $N_{C,A}$ des Hilfsresonators 3 ist in diesem Beispiel somit um mehr als 100 % größer als die Schwelleninversion $N_{C,H}$ des Hauptresonators 2, damit der Hauptresonator 2 und der Hilfsresonator 3 sich nicht gegenseitig stören. Bei größeren Werten für die Reflektivität $R_A$ des Auskoppelspiegels 13 des Hilfsresonators 3 von $R_A$ = ca. 60% wurde hingegen beobachtet, dass sich der Hauptresonator 2 und der Hilfsresonator 3 gegenseitig stören. Eine solche gegenseitige Störung führt zu einer deutlichen Verschlechterung der Pulsenergie-Stabilität, da der Hilfsresonator 3 dem Hauptresonator 2 Energie entzieht.

Abhängig von den Parametern der weiter oben angegebenen Gleichung (1) bzw. vom verwendeten laseraktiven Festkörpermedium 4 ist es nicht zwingend erforderlich, dass der Auskoppelgrad $A_A$ des Hilfsresonators 3 größer ist als der Auskoppelgrad $A_H$ des Hauptresonators 2, damit die Schwelleninversion $N_{C,A}$ des Hilfsresonators 3 (deutlich) größer ist als die Schwelleninversion $N_{C,H}$ des Hauptresonators 2. Dies kann beispielsweise der Fall sein, wenn es sich bei dem laseraktiven Festkörpermedium 4 um einen doppelbrechenden Kristall, z.B. um Nd:YVO4, handelt, bei dem die Emissionswirkungsquerschnitte $\sigma$ für die beiden Polarisationsrichtungen stark unterschiedlich sind und für die Laserstrahlung im Hilfsresonator 3 der kleinere Emissionswirkungsquerschnitt $\sigma$ verwendet wird.

Trotz des Hilfsresonators 3 ist aufgrund des deutlichen Unterschieds der Schwelleninversion $N_{C,H}$ des Hauptresonators 2 und der Schwelleninversion $N_{C,A}$ des Hilfsresonators 3 zusätzlich eine Erstpuls-Behandlung der ausgekoppelten Laserpulse 21 erforderlich, welche es ermöglicht, die Leistung des ersten Laserpulses 21 in einer Sequenz 19 von Laserpulsen 21 zu limitieren, so dass alle Laserpulse 21 nach einer Pulspause eine möglichst konstante Energie aufweisen.

Um dies zu erreichen, ist der optische Modulator 5 von Fig. 1 ausgebildet, eine variable, kontinuierlich oder stufenweise (in mehr als zwei Stufen) einstellbare Verlustrate Q (Q-Faktor) zu erzeugen, d.h. der optische Modulator 5 kann zwischen mehr als zwei Betriebszuständen (Modulator geöffnet bzw. geschlossen) umgeschaltet werden. Eine Steuerungseinrichtung 20 dient zur Einstellung der variablen Verlustrate Q, genauer gesagt zum Anlegen einer variablen RF-Spannung an den optischen Modulator 5, um die weiter oben beschriebene Erstpuls-Behandlung vorzunehmen.

Zu diesem Zweck bestehen verschiedene Möglichkeiten von denen zwei nachfolgend in Zusammenhang mit Fig. 2a,b näher erläutert werden. In dem oberen Diagramm von Fig. 2a,b ist jeweils die RF-Spannung (entsprechend bzw. proportional zur Verlustrate Q) gezeigt, die von der Steuerungseinrichtung 20 an den optischen Modulator 5 angelegt wird. In Fig. 2a,b ist in der unteren Darstellung die Energie E der aus dem Lasersystem 1 ausgekoppelten Laserpulse 21 dargestellt.

Bei dem in Fig. 2a gezeigten Beispiel wird die Erstpuls-Behandlung dadurch erreicht, dass der Q-Faktor bei den ersten Laserpulsen 21 der Sequenz 19 von Laserpulsen 21 nicht vom maximalen Q-Faktor auf den minimalen Q-Faktor umgeschaltet wird, wie dies bei den nachfolgenden Laserpulsen 21 der Sequenz 19 der Fall ist, vielmehr wird der Q-Faktor bzw. die Pulstiefe beim Auskoppeln der ersten Laserpulse 21 aus dem Hauptresonator 2 schrittweise reduziert, wobei nach einer geringen Anzahl von Laserpulsen 21 der Q-Faktor minimal gewählt wird und Laserpulse 21 mit einer jeweils konstanten Energie E erzeugt werden. Die in Fig. 2a beschriebene Vorgehensweise wird auch als First-Pulse-Suppression bezeichnet.

Bei dem in Fig. 2b gezeigten Beispiel wird die überschüssige Energie in dem Hauptresonator 2 nach einer Pulspause dissipiert, bevor die Sequenz 19 von Laserpulsen 21 erzeugt wird, was auch als Pre-Pulse-Killing bezeichnet wird. Wie in Fig. 2b zu erkennen ist, wird zu diesem Zweck die Verlustrate Q kontinuierlich in der Art einer Rampe abgesenkt, wobei das Lasersystem 1 kontinuierlich Energie E in Form von Dauerstrich-Laserstrahlung abgibt. Nachdem die überschüssige Energie E in dem Hauptresonator 2 dissipiert wurde, kann die Sequenz 19 von Laserpulsen 21 mit dem ersten Laserpuls 21 beginnen und es kann eine konstante Energie E für alle Laserpulse 21 der Sequenz 19 erzeugt werden. Der Akusto-Optische Modulator 5 ist hierbei derart ausgelegt, dass dieser den Hauptresonator 2 nicht vollständig sperren kann, d.h. auch wenn die Verlustrate Q maximal ist, tritt noch Laserstrahlung bzw. treten noch Laserpulse 21 aus dem Hauptresonator 2 aus, wenn die Verstärkung g nicht begrenzt wird. Erst in Kombination mit der Begrenzung der Verstärkung g mit Hilfe des Hilfsresonators 3 kann der Hauptresonator 2 mit Hilfe des optischen Modulators 5 vollständig gesperrt werden.

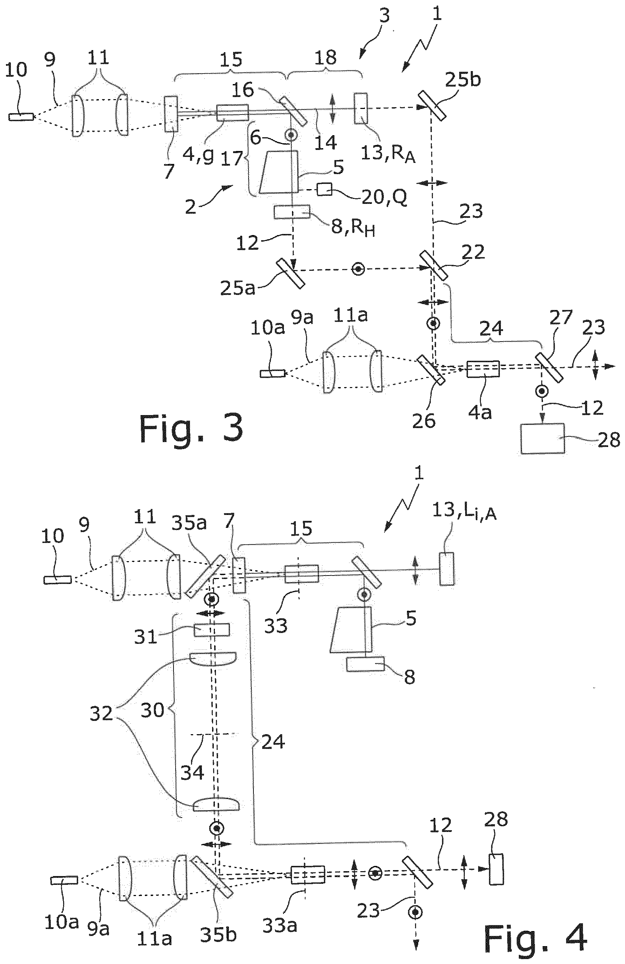

**Fig.** 3 zeigt ein Lasersystem 1, das wie das in Fig. 1 gezeigte Lasersystem 1 ausgebildet ist und das zusätzlich ein weiteres laseraktives Festkörpermedium 4a in Form eines Laserstabs aufweist, das aus dem gleichen Material wie das Festkörpermedium 4 im Hauptresonator 2 gebildet ist. Das weitere laseraktive Festkörpermedium 4a dient als Verstärker zur Verstärkung der aus dem Hauptresonator 2 ausgekoppelten Laserpulse 21, die dem weiteren laseraktiven Festkörpermedium 4a als Seed-Pulse zugeführt werden. Zum Pumpen des weiteren Festkörpermediums 4a ist in dem Lasersystem 1 eine weitere Pumplichtquelle in Form einer weiteren Laserdiode angeordnet, deren (weitere) Pumpstrahlung 9a über eine weitere Lichtleitfaser 10a mit einer zugehörigen weiteren Teleskopanordnung 11a auf die Stirnseite des weiteren laseraktiven Festkörpermediums 4a abgebildet wird. Auch das weitere laseraktive Festkörpermedium 4a wird daher mit Hilfe einer Laserdiode end-gepumpt, wozu dieselbe Pump-Wellenlänge verwendet werden kann als beim laseraktiven Festkörpermedium 4 im Hauptresonator 2.

Bei dem in Fig. 3 gezeigten Beispiel weist das Lasersystem 1 eine Überlagerungseinrichtung 22 in Form eines Polarisators auf, der zur Überlagerung des aus dem Hauptresonator 2 ausgekoppelten Nutz-Strahlengangs 12 und eines aus dem Hilfsresonator 3 ausgekoppelten Dump-Strahlengangs 23 ausgebildet ist. Die Überlagerung mittels des Polarisators 22 ist möglich, weil die Laserstrahlung im Hauptresonator-Strahlengang 6 und die Laserstrahlung im Hilfsresonator-Strahlengang 14 zueinander senkrechte Polarisationsrichtungen aufweisen. Der Nutz-Strahlengang 12 und der Dump-Strahlengang 23 werden an dem Polarisator 22 zur Bildung eines Überlagerungsabschnitts 24 überlagert, in dem das weitere laseraktive Medium 4a angeordnet ist. Wie in Fig. 3 ebenfalls zu erkennen ist, wird sowohl der Nutz-Strahlengang 12 als auch der Dump-Strahlengang 23 mit Hilfe eines jeweiligen Umlenkspiegels 25a,b auf den als Überlagerungseinrichtung dienenden Polarisator 22 umgelenkt. In dem Überlagerungsabschnitt 24 ist ein teiltransmissiver Faltungsspiegel 26 angeordnet, durch den die (weitere) Pumpstrahlung 9a in den Überlagerungsabschnitt 24 eingekoppelt und auf das weitere laseraktive Festkörpermedium 4a fokussiert wird.

Nach der Verstärkung in dem weiteren laseraktiven Festkörpermedium 4a wird am Ende des Überlagerungsabschnitts 24 der Nutz-Strahlengang 12 vom Dump-Strahlengang 23 mit Hilfe eines weiteren Polarisations-Strahlteilers 27 getrennt. Der Nutz-Strahlengang 12 mit den Laserpulsen 21 wird hierbei über eine nicht bildlich dargestellte Ablenkeinrichtung, die beispielsweise einen oder mehrere Scannerspiegel aufweisen kann, auf ein Werkstück 28 geführt. Der Dump-Strahlengang 23 wird hingegen auf eine nicht bildlich dargestellte Strahlfalle gelenkt, um die im Dump-Strahlengang 23 propagierende Dauerstrich-Laserstrahlung zu absorbieren. Das Lasersystem 1 gemeinsam mit der nicht bildlich dargestellten Ablenkeinrichtung bildet eine Markierungsvorrichtung zur Lasermarkierung des Werkstücks 28.

Das Führen des Dump-Strahlengangs 23 der aus dem Hilfsresonator 3 ausgekoppelten Laserstrahlung in den Überlagerungsabschnitt 24 und durch das weitere laseraktive Festkörpermedium 4a erzeugt eine Sättigung des weiteren laseraktiven Festköpermediums 4a in den Vektorpausen bei der Markierung des Werkstücks 28, in denen keine Laserpulse 21 in das weitere laseraktive Festkörpermedium 4a eingekoppelt werden. Durch die Sättigung des Verstärkers bzw. des weiteren laseraktiven Festkörpermediums 4a mit Hilfe der Dauerstrich-Strahlung des Dump-Strahlengangs 23 kann auf eine Erstpuls-Behandlung bei dem weiteren laseraktiven Festkörpermedium 4a verzichtet werden. Auch ist es nicht erforderlich, für die Erstpuls-Behandlung des weiteren laseraktiven Festkörpermediums 4a weitere Hilfsresonatoren in dem Lasersystem 1 vorzusehen.

Wie weiter oben beschrieben wurde, sind das Festkörpermedium 4 und das weitere Festkörpermedium 4a aus dem gleichen Material gebildet, und zwar aus einem uniaxialen Kristall, z.B. um Yb:YAG, Nd:YAG, Yb:LuAG, Yb:CaF2, Yb:Lu2O3 oder um Yb:GGG, dessen optische Eigenschaften für beide Polarisationsrichtungen isotrop sind. Nachteilig bei derartigen Kristallen ist es jedoch, dass sich durch die Pumpstrahlung 9, 9a die Kristalle erwärmen und sich dadurch eine radialsymmetrische Spannungs-Doppelbrechung in den laseraktiven Festkörpermedien 4, 4a ausbildet, welche die Polarisationen räumlich aufgelöst unterschiedlich dreht, so dass es zu einer Depolarisation kommt, welche den Kontrast zwischen dem Nutz-Strahlengang 12 und dem Dump-Strahlengang 23 reduziert.

Bei dem in Fig. 4 gezeigten Lasersystem 1 wird zur Kompensation der Depolarisation in dem laseraktiven Medium 4 eine Depolarisations-Kompensationseinrichtung 30 verwendet, die in dem Überlagerungsabschnitt 24 angeordnet ist. Für die Depolarisations-Kompensation wird ausgenutzt, dass auch das weitere laseraktive Festkörpermedium 4a eine Depolarisation erzeugt. Durch eine Vertauschung der Polarisationsrichtungen des Nutz-Strahlengangs 12 und des Dump-Strahlengangs 23 in dem Überlagerungsabschnitt 24 mit Hilfe der Depolarisations-Kompensationseinrichtung 30 kann die in dem laseraktiven Festkörpermedium 4 erzeugte Depolarisation mittels des weiteren laseraktiven Festkörpermediums 4a kompensiert werden. Um dies zu erreichen, weist die Depolarisations-Kompensationseinrichtung 30 eine polarisationsdrehende Einrichtung 31 in Form eines Quarz-Rotators auf, die in dem Überlagerungsabschnitt 24 vor dem weiteren laseraktiven Festkörpermedium 4a angeordnet ist. Der Quarz-Rotator 31 dreht die Polarisationsrichtungen des Nutz-Strahlengangs 12 und des Dump-Strahlengangs 23 um 90°.

Zusätzlich weist die Depolarisations-Kompensationseinrichtung 30 eine abbildende Optik 32 auf, die eine Hauptebene 33 des laseraktiven Festkörpermediums 4 auf eine entsprechende Hauptebene 33a des weiteren laseraktiven Festkörpermediums 4a abbildet. Im gezeigten Beispiel ist die abbildende Optik 32 zur Erzeugung einer 4f-Abbildung der beiden Hauptebenen 33, 33a ausgebildet. Alternativ kann die abbildende Optik 32 ausgebildet sein, andere einander entsprechende Ebenen der laseraktiven Festkörpermedien 4, 4a aufeinander abzubilden. Beispielsweise können die Stirnseiten der beiden laseraktiven Festkörpermedien 4, 4a aufeinander abgebildet werden, wie dies in dem eingangs zitierten Buch "Optical Resonators: Fundamentals, Advanced Concepts and Applications" auf den Seiten 358-363 näher beschrieben ist, welche durch Bezugnahme zum Inhalt dieser Anmeldung gemacht werden.

Grundsätzlich kann bei der Depolarisations-Kompensationseinrichtung 30 zwar auf die abbildende Optik 32 verzichtet werden, diese erhöht aber die Effektivität der Depolarisations-Kompensation. Um die Abbildung zu ermöglichen bzw. um eine möglichst effektive Depolarisations-Kompensation zu erreichen, werden bei dem in Fig. 4 gezeigten Beispiel sowohl der Nutz-Strahlengang 12 als auch der Dump-Strahlengang 23 gemeinsam über den ersten Spiegel 7 aus dem Hauptresonator 2 und aus dem Hilfsresonator 3 bzw. aus dem gemeinsamen Resonatorabschnitt 15 ausgekoppelt. Um auch bei dem in Fig. 4 gezeigten Lasersystem 1 eine fest vorgegebene Verlustrate $A_A$ des Hilfsresonators 3 zu erzeugen, die mindestens 20% größer ist als die Verlustrate $A_H$ des Hauptresonators 2, ist der plane Endspiegel 13 des Hilfsresonators 3 als Verlustelement ausgebildet. Der Endspiegel 13 weist eine vergleichsweise geringe Reflektivität $R_A$ von weniger als ca. 60% auf und erzeugt daher eine Verlustrate $A_A$ von. ca. 40%. Es versteht sich, dass auch andere Arten von Verlustelementen in dem Hilfsresonator 3 angeordnet werden können. Beispielsweise können in dem Hilfsresonator 3 bzw. in dem Hilfsresonator-Abschnitt 14 Verlustelemente in Form von Faltungsspiegeln oder von transmittierenden optischen Elementen angeordnet werden. Der (gemeinsame) Auskoppelgrad des Hauptresonators 2 und des Hilfsresonators 3 an dem gemeinsamen Auskoppelspiegel 7 liegt bei ca. 20%.

Für eine möglichst effiziente Depolarisations-Kompensation hat es sich als günstig erwiesen, wenn der Strahlengang zwischen dem laseraktiven Festkörpermedium 4 und dem weiteren laseraktiven Festkörpermedium 4a möglichst symmetrisch zu einer Mittelebene 34 der abbildenden Optik 32 verläuft, die mittig zwischen den beiden Linsen der abbildenden Optik 32 verläuft. Die Abstände der beiden laseraktiven Festkörpermedien 4, 4a von der Mittelebene 34 sind gleich groß und auch die Umlenkung des Strahlengangs in dem Überlagerungsabschnitt 24 erfolgt an zwei Umlenkspiegeln 35a, 35b, die jeweils im gleichen Abstand zur Mittelebene 34 der abbildenden Optik 32 angeordnet sind. Auch hat es sich als günstig erwiesen, wenn das Pumpen der beiden laseraktiven Festkörpermedien 4, 4a auf die gleiche Weise erfolgt, d.h. wenn die Pumpstrahlung 9, 9a mit derselben Pumpleistung und mit derselben Pumpspot-Größe auf das jeweilige laseraktive Festkörpermedium 4, 4a fokussiert wird.

Es versteht sich, dass auf eine Depolarisations-Kompensation verzichtet werden kann, wenn der Hauptresonator-Strahlengang 6 und der Hilfsresonator-Strahlengang 14 sich nicht durch unterschiedliche Polarisationsrichtungen, sondern durch mindestens eine andere Eigenschaft voneinander unterscheiden, beispielsweise wenn im Hauptresonator 2 und im Hilfsresonator 3 Laserstrahlung mit unterschiedlichen Wellenlängen erzeugt wird. Auch ist es nicht zwingend erforderlich, dass der Hauptresonator-Strahlengang 6 und der Hilfsresonator-Strahlengang 14 mit Hilfe einer Kopplungseinrichtung 16 miteinander gekoppelt werden, vielmehr kann auch eine Kopplung dadurch erfolgen, dass der Hauptresonator-Strahlengang 6 und der Hilfsresonator-Strahlengang 14 räumlich voneinander getrennt werden. In diesem Fall können der Hauptresonator-Strahlengang 6 und der Hilfsresonator-Strahlengang 14 das laseraktive Festkörpermedium 4 aus unterschiedlichen Richtungen durchlaufen und sich lediglich innerhalb des laseraktiven Festkörpermediums 4 überschneiden.

**Patentansprüche**

1.  Lasersystem (1) zur Erzeugung von Laserpulsen (21), umfassend:

    einen Hauptresonator (2) mit einem Hauptresonator-Strahlengang (6), in dem ein laseraktives Medium (4), insbesondere ein laseraktives Festkörpermedium, und
    ein optischer Modulator (5) angeordnet sind,
    einen Hilfsresonator (3) zur Begrenzung der Verstärkung (g) des laseraktiven Mediums (4) des Hauptresonators (2), wobei ein Hilfsresonator-Strahlengang (14) und der Hauptresonator-Strahlengang (6) einen gemeinsamen Resonatorabschnitt (15) aufweisen, in dem das laseraktive Medium (4) angeordnet ist,
    **dadurch gekennzeichnet,**
    **dass** der Hilfsresonator (3) eine vorgegebene Schwelleninversion ($N_{C,A}$) aufweist, die um mindestens 10%, bevorzugt um mindestens 20%, insbesondere um mindestens 50% größer ist als eine minimale Schwelleninversion ($N_{C,H}$) des Hauptresonators (2).

2.  Lasersystem nach Anspruch 1, bei dem der Hilfsresonator (3) eine Auskoppeleinrichtung, insbesondere einen Auskoppelspiegel (13), aufweist, dessen Reflektivität ($R_A$) um mindestens 10%, bevorzugt um mindestens 20% kleiner ist als eine Reflektivität ($R_H$) einer Auskoppeleinrichtung, insbesondere eines Auskoppelspiegels (8), des Hauptresonators (2).

3.  Lasersystem nach Anspruch 1 oder 2, bei dem der Hilfsresonator (3) mindestens ein Verlustelement (13) zu Erzeugung einer vorgegebenen Verlustrate ($L_{i,A}$) des Hilfsresonators (3) aufweist.

4.  Lasersystem nach einem der vorhergehenden Ansprüche, bei welcher der optische Modulator (5) zur Einstellung einer kontinuierlich und/oder stufenweise einstellbaren Verlustrate (Q) ausgebildet ist.

5.  Lasersystem nach Anspruch 4, weiter umfassend: eine Steuerungseinrichtung (20) zur Ansteuerung des optischen Modulators (5) zur Erstpuls-Behandlung einer Sequenz (19) von Laserpulsen (21).

6.  Lasersystem nach einem der vorhergehenden Ansprüche, weiter umfassend: eine Kopplungseinrichtung (16) zur Bildung des gemeinsamen Resonatorabschnitts (15) durch Kopplung des Hilfsresonator-Strahlengangs (14) des Hilfsresonators (3) an den Hauptresonator-Strahlengang (6) des Hauptresonators (2).

7.  Lasersystem nach Anspruch 6, bei dem die Kopplungseinrichtung einen Polarisations-Strahlteiler (16) umfasst.

8. Lasersystem nach einem der vorhergehenden Ansprüche, weiter umfassend: ein weiteres laseraktives Medium (4a), insbesondere ein weiteres laseraktives Festkörpermedium, das in einem Überlagerungsabschnitt (24) eines aus dem Hauptresonator (3) ausgekoppelten Nutz-Strahlengangs (12) und eines aus dem Hilfsresonator (3) ausgekoppelten Dump-Strahlengangs (23) angeordnet ist.

9. Lasersystem nach Anspruch 8, weiter umfassend: eine Überlagerungseinrichtung, insbesondere einen Polarisator (22), zur Bildung des Überlagerungsabschnitts (24) durch Überlagerung des Nutz-Strahlengangs (12) und des Dump-Strahlengangs (23).

10. Lasersystem nach einem der Ansprüche 8 oder 9, weiter umfassend: eine Depolarisations-Kompensationseinrichtung (30) zur Kompensation einer Depolarisation in dem laseraktiven Medium (4) durch das weitere laseraktive Medium (4a).

11. Lasersystem nach Anspruch 10, bei welcher die Depolarisations-Kompensationseinrichtung (30) eine polarisationsdrehende Einrichtung (31) aufweist, die in dem Überlagerungsabschnitt (24) vor dem weiteren laseraktiven Medium (4a) angeordnet ist.

12. Lasersystem nach einem der Ansprüche 10 oder 11, bei welchem die Depolarisations-Kompensationseinrichtung (30) eine abbildende Optik (32) zur Abbildung einer Ebene (33) des laseraktiven Festkörpermediums (4) auf eine korrespondierende Ebene (33a) des weiteren laseraktiven Festkörpermediums (4a) aufweist.

13. Lasersystem nach einem der Ansprüche 8 bis 12, bei welchem das laseraktive Festkörpermedium (4) und das weitere laseraktive Festkörpermedium (4a) aus dem gleichen Material gebildet sind.

14. Lasersystem nach einem der vorhergehenden Ansprüche, bei welchem das laseraktive Festkörpermedium (4) und bevorzugt das weitere laseraktive Festkörpermedium (4a) ausgewählt ist/sind aus der Gruppe umfassend: Nd:YAG, Yb:YAG, Yb:LuAG, Yb:CaF2, Yb:Lu2O3, Yb:GGG, Nd:YVO4, Nd:GdVO4, Yb:KGW und Yb:KYW.


**Geänderte Patentansprüche gemäss Regel 137(2) EPÜ.**

1. Lasersystem (1) zur Erzeugung von Laserpulsen (21), umfassend:

   einen Hauptresonator (2) mit einem Hauptresonator-Strahlengang (6), in dem ein laseraktives Medium (4), insbesondere ein laseraktives Festkörpermedium, und ein optischer Modulator (5) angeordnet sind, einen Hilfsresonator (3) zur Begrenzung der Verstärkung (g) des laseraktiven Mediums (4) des Hauptresonators (2), wobei ein Hilfsresonator-Strahlengang (14) und der Hauptresonator-Strahlengang (6) einen gemeinsamen Resonatorabschnitt (15) aufweisen, in dem das laseraktive Medium (4) angeordnet ist, wobei der Hauptresonator-Strahlengang (6) und der Hilfsresonator-Strahlengang (14) den gemeinsamen Resonatorabschnitt (15) entweder parallel durchlaufen oder den gemeinsamen Resonatorabschnitt (15) in zwei unterschiedlichen Richtungen durchlaufen und sich lediglich in dem laseraktiven Medium (4) überschneiden,
   **dadurch gekennzeichnet,**
   **dass** der Hilfsresonator (3) eine vorgegebene Schwelleninversion ($N_{C,A}$) aufweist, die um mindestens 10%, bevorzugt um mindestens 20%, insbesondere um mindestens 50% größer ist als eine minimale Schwelleninversion ($N_{C,H}$) des Hauptresonators (2) und
   **dass** der optische Modulator (5) zur Einstellung einer kontinuierlich oder stufenweise einstellbaren Verlustrate (Q) ausgebildet ist, bei dem zwischen einem geöffneten Schaltzustand und einem geschlossenen Schaltzustand weitere Schaltzustände einstellbar sind, die eine teilweise Öffnung des Hauptresonators (2) ermöglichen.

2. Lasersystem nach Anspruch 1, bei dem der Hilfsresonator (3) eine Auskoppeleinrichtung, insbesondere einen Auskoppelspiegel (13), aufweist, dessen Reflektivität ($R_A$) um mindestens 10%, bevorzugt um mindestens 20% kleiner ist als eine Reflektivität ($R_H$) einer Auskoppeleinrichtung, insbesondere eines Auskoppelspiegels (8), des Hauptresonators (2).

3. Lasersystem nach Anspruch 1 oder 2, bei dem der Hilfsresonator (3) mindestens ein Verlustelement (13) zu Erzeugung einer vorgegebenen Verlustrate ($L_{i,A}$) des Hilfsresonators (3) aufweist.

4. Lasersystem nach einem der vorhergehenden Ansprüche, weiter umfassend: eine Steuerungseinrichtung (20) zur Ansteuerung des optischen Modulators (5) zur Erstpuls-Behandlung einer Sequenz (19) von Laserpulsen (21) zum Erzeugen eines ersten Laserpulses (21) der Sequenz (19) von Laserpulsen (21) mit einer Energie (E), die möglichst gleich groß wie bei den nachfolgenden Laserpulsen (21) der Sequenz (19) von Laserpulsen (21) ist.

5. Lasersystem nach einem der vorhergehenden Ansprüche, weiter umfassend: eine Kopplungseinrichtung (16) zur Bildung des gemeinsamen Resonatorabschnitts (15) durch Kopplung des Hilfsresonator-Strahlengangs (14) des Hilfsresonators (3) an den Hauptresonator-Strahlengang (6) des Hauptresonators (2).

6. Lasersystem nach Anspruch 5, bei dem die Kopplungseinrichtung einen Polarisations-Strahlteiler (16) umfasst.

7. Lasersystem nach einem der vorhergehenden Ansprüche, weiter umfassend: ein weiteres laseraktives Medium (4a), insbesondere ein weiteres laseraktives Festkörpermedium, das in einem Überlagerungsabschnitt (24) eines aus dem Hauptresonator (3) ausgekoppelten Nutz-Strahlengangs (12) und eines aus dem Hilfsresonator (3) ausgekoppelten Dump-Strahlengangs (23) angeordnet ist.

8. Lasersystem nach Anspruch 7, weiter umfassend: eine Überlagerungseinrichtung, insbesondere einen Polarisator (22), zur Bildung des Überlagerungsabschnitts (24) durch Überlagerung des Nutz-Strahlengangs (12) und des Dump-Strahlengangs (23).

9. Lasersystem nach einem der Ansprüche 7 oder 8, weiter umfassend: eine Depolarisations-Kompensationseinrichtung (30) zur Kompensation einer Depolarisation in dem laseraktiven Medium (4) durch das weitere laseraktive Medium (4a).

10. Lasersystem nach Anspruch 9, bei welcher die Depolarisations-Kompensationseinrichtung (30) eine polarisationsdrehende Einrichtung (31) aufweist, die in dem Überlagerungsabschnitt (24) vor dem weiteren laseraktiven Medium (4a) angeordnet ist.

11. Lasersystem nach einem der Ansprüche 9 oder 10, bei welchem die Depolarisations-Kompensationseinrichtung (30) eine abbildende Optik (32) zur Abbildung einer Ebene (33) des laseraktiven Festkörpermediums (4) auf eine korrespondierende Ebene (33a) des weiteren laseraktiven Festkörpermediums (4a) aufweist.

12. Lasersystem nach einem der Ansprüche 9 bis 11, bei welchem das laseraktive Festkörpermedium (4) und das weitere laseraktive Festkörpermedium (4a) aus dem gleichen Material gebildet sind.

13. Lasersystem nach einem der vorhergehenden Ansprüche, bei welchem das laseraktive Festkörpermedium (4) und bevorzugt das weitere laseraktive Festkörpermedium (4a) ausgewählt ist/sind aus der Gruppe umfassend: Nd:YAG, Yb:YAG, Yb:LuAG, Yb:CaF2, Yb:Lu2O3, Yb:GGG, Nd:YVO4, Nd:GdVO4, Yb:KGW und Yb:KYW.

Fig. 1

Fig. 2a

Fig. 2b

Fig. 3

Fig. 4

**Europäisches Patentamt**
**European Patent Office**
**Office européen des brevets**

# EUROPÄISCHER RECHERCHENBERICHT

Nummer der Anmeldung

EP 18 18 0659

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | WO 2013/017338 A1 (IMP INNOVATIONS LTD [GB]; MIDAZ LASERS LTD [GB]; DAMZEN MICHAEL J [GB]) 7. Februar 2013 (2013-02-07) * Seite 10, Zeile 13 - Seite 17, Zeile 4; Abbildungen 2-5 * * Seite 22, Zeile 19 - Zeile 27 * ----- | 1-14 | INV. H01S3/082 H01S3/117 H01S3/23 ADD. H01S3/115 |
| X | DE 101 47 798 A1 (HAAS LASER GMBH & CO KG [DE]) 6. März 2003 (2003-03-06) * Absätze [0068] - [0076]; Abbildungen 6-8 * ----- | 1-5,14 | |
| A,D | US 6 038 241 A (VON ELM RUDIGER [DE] ET AL) 14. März 2000 (2000-03-14) * das ganze Dokument * * Abbildungen 9,10 * ----- | 5 | |

**RECHERCHIERTE SACHGEBIETE (IPC)**

H01S

Der vorliegende Recherchenbericht wurde für alle Patentansprüche erstellt

| Recherchenort | Abschlußdatum der Recherche | Prüfer |
|---|---|---|
| München | 6. Dezember 2018 | Riechel, Stefan |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 18 0659

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-12-2018

| Im Recherchenbericht angeführtes Patentdokument | Datum der Veröffentlichung | Mitglied(er) der Patentfamilie | Datum der Veröffentlichung |
|---|---|---|---|
| WO 2013017338 A1 | 07-02-2013 | KEINE | |
| DE 10147798 A1 | 06-03-2003 | KEINE | |
| US 6038241 A | 14-03-2000 | DE 19747180 A1<br>EP 0918383 A2<br>JP H11224968 A<br>US 6038241 A | 22-07-1999<br>26-05-1999<br>17-08-1999<br>14-03-2000 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013017338 A1
- WO 2005013445 A1
- US 6038241 A
- WO 2008060407 A2
- DE 19707003 A1
- US 6078606 A
- US 8995052 B1

**In der Beschreibung aufgeführte Nicht-Patentliteratur**

- **O. SVELTO.** Principles of Lasers. Springer Verlag, 2010, vol. 5
- **NORMAN HODGSON ; HORST WEBER.** Optical Resonators: Fundamentals, Advanced Concepts and Applications. Springer Verlag, 2013, 358-363
- *Optical Resonators: Fundamentals, Advanced Concepts and Applications,* 358-363